## Europäisches Patentamt
## European Patent Office
## Office européen des brevets

(19)

(11) Numéro de publication: **0 006 051**
**A1**

# DEMANDE DE BREVET EUROPEEN

(21) Numéro de dépôt: **79400327.7**

(22) Date de dépôt: **23.05.79**

(51) Int. Cl.²: **G 01 L 5/00**
**H 01 H 3/04, G 01 D 5/04**

(30) Priorité: **26.05.78 FR 7815843**

(43) Date de publication de la demande:
**12.12.79 Bulletin 79/25**

(84) Etats Contractants Désignés:
**BE CH DE GB IT**

(71) Demandeur: **SOCIETE FRANCAISE D'EQUIPEMENTS POUR LA NAVIGATION AERIENNE (S.F.E.N.A.)**
**B.P. 59 Aérodrome de Villacoublay**
**F-78140 Velizy Villacoublay(FR)**

(72) Inventeur: **Dupuis, Jean-Claude**
**13 boulevard d'Estrées**
**F-86100 Chatellerault(FR)**

(72) Inventeur: **Roudavitch, Georges**
**6, rue Paul Valéry**
**F-86100 Chatellerault(FR)**

(74) Mandataire: **Kavos, Stéphane**
**B.P. 59 Aérodrome de Villacoublay**
**F-78140 Velizy Villacoublay(FR)**

(54) Détecteur électrodynamométrique à seuil d'effort.

Bielle électrodynamométrique à seuil d'effort constituant un détecteur de commande électrique de haute sécurité, caractérisée en ce qu'elle comprend: un moyen mécanique d'établissement d'un contact électrique au-dessus d'une certaine force appelée "seuil dynamométrique de manoeuvre", force applicable indifféremment en traction ou en compression, ledit moyen mécanique comprenant un détecteur dynamique à seuil (12, 14, 15, 16, 19, 30, 31, 32) actionnant un moyen de déclenchement (18) d'un courant électrique.

fig. 3a

-1-

## DETECTEUR ELECTRODYNAMOMETRIQUE A SEUIL D'EFFORT

La présente invention a pour objet une bielle à contact à seuil d'effort constituant un détecteur de commande électrique de haute sécurité, et plus particulièrement une bielle comprenant un moyen mécanique d'établissement d'un contact électrique au-dessus d'une certaine force appelée "seuil dynamométrique de manoeuvre" applicable indifféremment en traction ou en compression, ledit moyen mécanique comprenant : un détecteur dynamométrique à seuil agissant sur un moyen de déclenchement d'un micro-contact électrique intermédiaire de transformation d'un déplacement axial en un déplacement radial.

La bielle à contact selon la présente invention trouve une première application dans l'aviation et plus particulièrement dans les hélicoptères.

Elle comprend une partie fixe pouvant être reliée de façon facultative par l'intermédiaire d'un embout à rotule à un élément avion ou à un tube de bielle avion ; et une partie mobile reliée par l'intermédiaire d'une chape ou un embout à rotule à un élément avion par son autre extrêmité.

A noter que par "élément avion", il faut entendre de façon non restrictive, soit un élément mobile : levier, maneton, ... soit tout élément de raccordement à une partie fixe de

0006051

-2-

l'avion, telle que sa structure, simple ou composite.

Un but de la présente invention est de proposer une bielle résolvant le problème posé par l'exigence d'aucun déplacement entre les parties fixes et mobiles tant que la force de manoeuvre n'a pas atteint et dépassé une valeur prédéterminée.

Un autre but de la présente invention est de réaliser une bielle assurant simultanément d'une part, un jeu nul entre les parties fixes et mobiles tant que l'on se trouve au-dessous de ladite valeur de charge prédéterminée, et d'autre part, une ampleur contrôlée de course de la partie mobile n'agissant sur le contact électrique d'après dépassement dudit seuil.

Nous allons maintenant décrire, à l'aide des figures jointes, un mode de réalisation d'une bielle selon l'invention, donné à titre d'exemple non limitatif :
- la figure 1 est un schéma de principe montrant la zone dynamométrique constituée par les parties fixes et mobiles du moyen mécanique et la zone d'amplification et de contact électrique ; en même temps que le raccordement de la bielle à l'élément avion par chacune de ses extrêmités ;
- la figure 2 est une coupe transversale montrant la constitution de la zone dynamométrique mettant en évidence les détails de structure des parties fixes et mobiles ;
- la figure 3a illustre un premier mode d'obtention d'une poussée radiale à partir d'une force axiale en combinaison avec un dispositif amplificateur de force et/ou de déplacement ;
- la figure 3b illustre un deuxième mode d'obtention d'une poussée radiale à partir d'une force axiale à travers un dispositif amplificateur ;
- les figures 4 et 5 montrent le moyen de transformer une force axiale de traction ou de compression en une force de poussée radiale ;

- la figure 5 est un diagramme agrandi, mettant en évidence le sens de la force radiale résultant du moindre déplacement de la bille 12 de la figure 4, le long de l'une quelconque des surfaces coniques ou plans inclinés 14 ou 15.

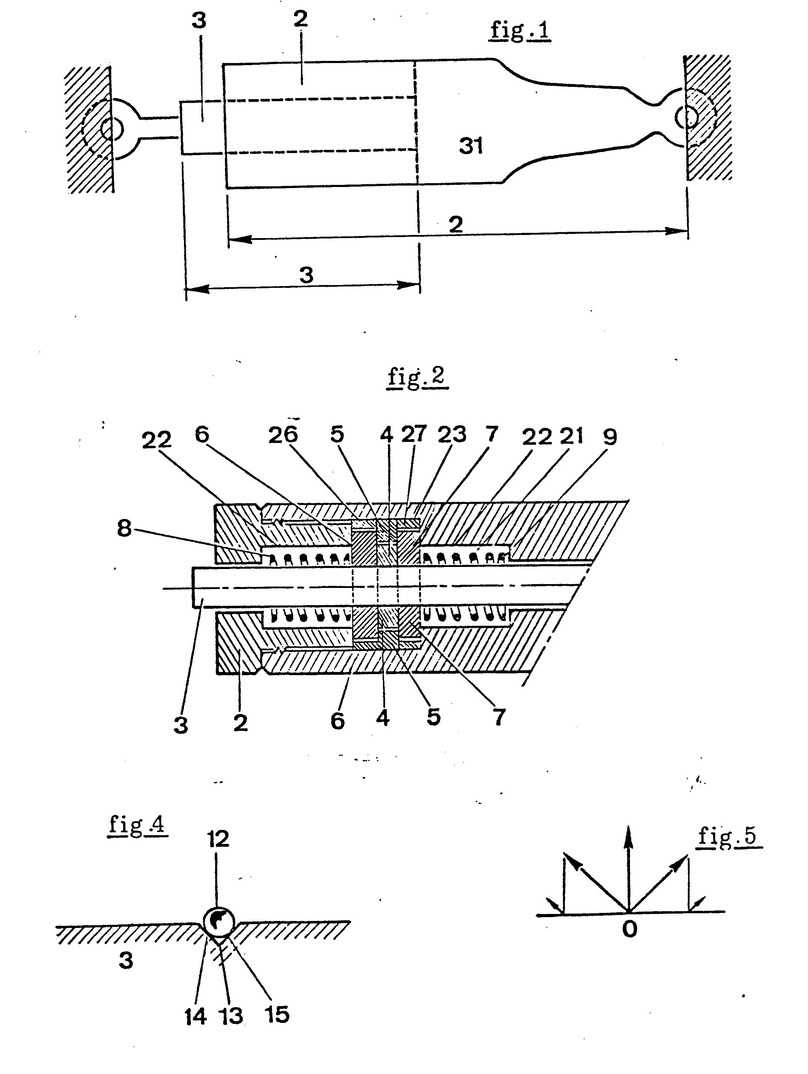

On voit sur la figure 2 une partie mobile 3 constituée par une tige cylindrique coulissant à l'intérieur d'un manchon cylindrique correspondant à la partie fixe 2 de la figure 1; à l'intérieur du manchon précis un évidement cylindrique symétrique 21 à deux niveaux.

Un premier palier au niveau 22 de diamètre $d_1$, un deuxième palier central au niveau 23 de diamètre $d_2 > d_1$.

La largeur du palier central 23 est telle qu'elle est légèrement supérieure à la somme des épaisseurs des rondelles 4, 6 et 7 ou 5, 6 et 7 ; la profondeur des épaulements de raccordement du palier 23 au palier 22 est telle que les rondelles 6 et 7, de préférence de même diamètre, disposées de part et d'autre des rondelles centrales concentriques 4 et 5, rigoureusement de même épaisseur, viennent buter sur lesdits épaulements.

Dans l'espace libre laissé entre la tige mobile 3 et les paliers 22 de l'évidement 21 à deux niveaux de la partie fixe 2, sont logés deux éléments élastiques 8 et 9 travaillant tous deux à la compression ; ces éléments étant représentés dans le cas de l'exemple considéré par deux ressorts hélicoïdaux qui agissent à travers les rondelles 6 et 7 sensiblement de même épaisseur sur les deux rondelles concentriques 4 et 5 précitées.

Ampleur de la course axiale de la partie libre :
Par construction, la partie mobile 3 peut coulisser dans la

0006051

-4-

partie fixe 2 suivant une course limitée par le jeu très faible qui existe entre la largeur du palier 23, délimitant l'écart entre les deux épaulements formant butées et la somme des épaisseurs des rondelles 5, 6 et 7 ou 4, 6 et 7 précitées. Un tel montage assure un jeu nul toutes les fois que l'on applique à la bielle une force en traction ou une force en compression dont la valeur se trouve au-dessous de la valeur de charge prédéterminée des éléments élastiques ou seuils et contrôle l'ampleur de la course de la partie mobile, réduite à l'extrême.

Le fait que les forces opposées peuvent être symétriques ou dissymétriques, c'est-à-dire de même valeur ou de valeur différente selon le sens de leur action ouvre un champ nouveau d'applications à la bielle selon l'invention. Noter, que les rondelles concentriques coaxiales 4 et 5 peuvent être rectifiées simultanément en épaisseur quelle que soit la cote de celle-ci.

Les jeux radiaux existant par construction entre la partie fixe et la partie mobile sont annihilés par ce montage mécanique.

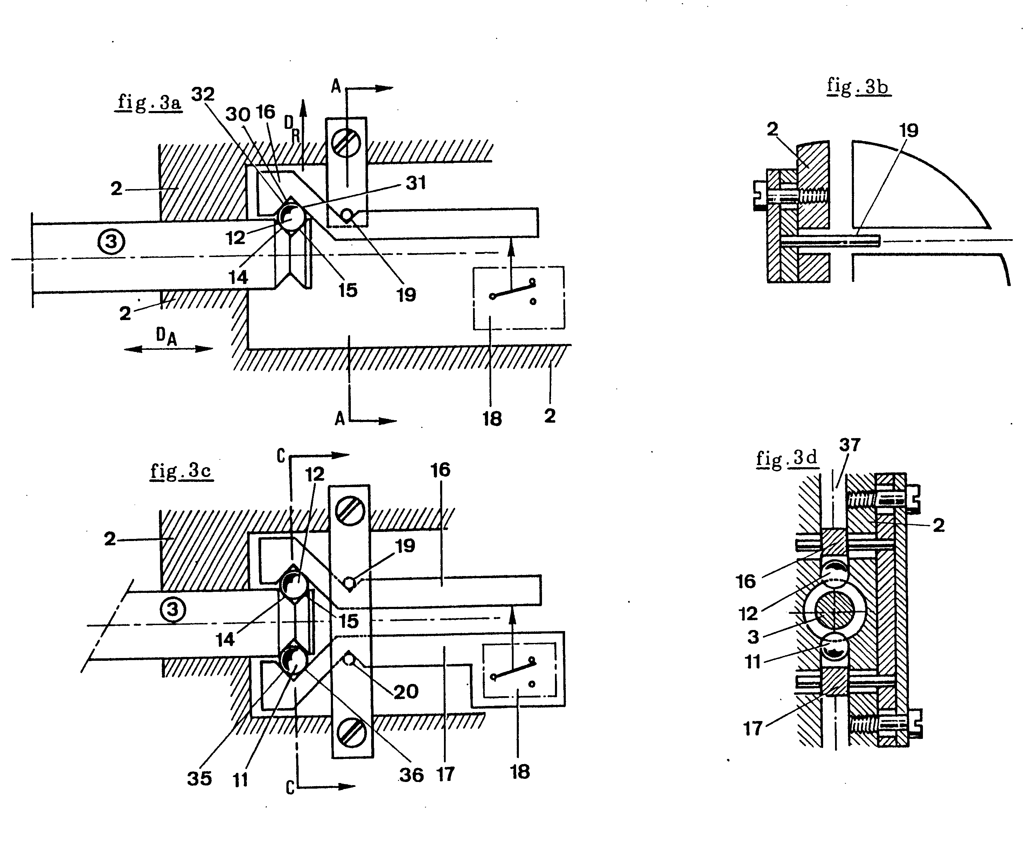

Détection électrique à travers un dispositif amplificateur figures 3a, b, c et d. Un microcontact à rupture brusque 18 solidaire de la partie fixe 2, est actionné par la partie mobile 3 à travers un dispositif d'amplification dont on va décrire le mécanisme.

Dans le cas d'une très faible course imposée à la partie mobile, par exemple de l'ordre de 0,04 à 0,05 mm, de celle-ci est 5 à 6 fois plus faible que la course nécessaire au changement d'état du microcontact qui est de l'ordre de 0,20 mm.

D'où la condition impérative d'interposer entre ces deux

0006051

-5-

éléments un système amplificateur de course de valeur correspondante, devant de plus remplir de façon non évidente
les exigences suivantes :

- amplifier dans les deux sens de fonctionnements en traction et/ou en compression,
- présenter une absence de jeu,
- avoir un hystérésis nul,
- être insensible aux jeux radiaux existant entre la partie
fixe et la partie mobile,
- être insensible aux variations de température (dans un
large domaine, allant de -80°c +100°c).

Pour répondre à la fonction d'amplification et aux exigences précitées, on peut faire appel :
- soit à un système classique d'amplification du mouvement
basé sur un rapport de bras de levier mais fonctionnant
dans les deux sens, donc nécessitant deux microcontacts,
- soit un système d'amplification plus élaboré transformant
un mouvement axial quelconque, aller ou retour, autrement
dit dans les deux sens de la partie mobile par rapport à la
partie fixe en un mouvement radial toujours orienté dans le
même sens ; ce mouvement radial unique agissant alors sur
un seul microcontact.

Dans ce système d'amplification, réalisé selon l'invention,
un axe de pivotement 19 du levier amplificateur 16 solidaire de la partie fixe est positionné sur un même plan parallèle à l'axe de la partie mobile matérialisé par l'axe de
la bille 12.

Le mécanisme adopté tel que représenté sur les figures 3a
et 3b se présente sous la forme d'une bille 12 enserrée
entre deux pentes inversées 14 et 15 d'une encoche 13 prévue à l'extrémité interne de la partie mobile 3, et une
encoche 30 (à pentes inversées 31-32) d'un levier 16 en

-6-

forme de col de cygne reposant par sa partie dorsale sur la tige 19 formant un axe de pivotement solidaire de la partie fixe 2.

Fonctionnement du dispositif amplificateur tel que représenté sur les figures 3a et 3b : tout déplacement axial $D_A$ en traction ou en compression de la partie mobile 3, se transforme en un déplacement radial $D_R$ de la bille 12 poussant le levier 16 toujours dans le même sens.

Bien que hautement satisfaisant, ce système présente les inconvénients suivants :

1°) Les jeux radiaux, de fabrication, entre la partie fixe 2 et la partie mobile 3, limitent la précision du système de détection. Lorsque la valeur de ce jeu devient trop importante une action radiale provenant de l'extérieur sur la partie mobile 3 peut déclencher le microcontact.

2°) Un autre inconvénient possible de ce mode de réalisation réside en ce que, il faut une amplification non négligeable, de l'ordre de 6 à 8 dans l'exemple non limitatif considéré, pour actionner le microcontact à l'aide d'une course très faible de la partie mobile 3. Ce qui impose des bras de levier longs, augmentant les dimensions de la bielle, et des qualités ou performances de résistance aux chocs, aux vibrations et aux écarts de température.

Pour s'affranchir des tolérances de fabrication des pièces solidaires de la partie fixe 2, il est possible de rendre réglable la position de l'axe 19 au moyen d'une plaque mobile, dont la solidarisation avec la partie fixe 2 est assurée au moyen d'une vis ou un moyen analogue.

La variante de réalisation du système d'amplification à deux bras amplificateurs montés en position diamétralement opposée, et commandés par un cône solidaire de la partie mobile de la bielle dynamométrique conformément aux figures 3c et 3d assure un montage insensible aux jeux radiaux permettant d'obtenir un système insensible aux vibrations de toute nature ; qualité recherchée en avionique.

Dans cette variante de réalisation, l'extrémité interne à double cônes inversés 35 et 36 passe devant une fente 37 prévue dans la partie fixe d'une part, pour maintenir les déplacements des leviers 16 et 17 dans un même plan et d'autre part, pour maintenir les billes 11 et 12 en position diamétralement opposée.

Il en résulte qu'une fois la position relative des axes 19 et 20 réglée, les deux billes 11 et 12 soumises à une poussée ou une compression radiale agissant simultanément sur les deux bras de levier 16 et 17 d'une manière identique à celle qui vient d'être décrite pour le levier 16 des figures 3a et 3b.

Pour une même ampleur de course axiale, le déplacement radial simultané et de sens contraire des bras de levier 16 et 17, a pour effet d'assurer le microcontact avec un rapport de bras de levier deux fois moins grand sur chacun d'eux.

De plus, les jeux radiaux entre la partie fixe 2 et la partie mobile 3 sont sans effet du fait que les deux billes se déplacent simultanément dans la même direction mais suivant des sens opposés et de façon identique.

Les bras 16 et 17 pivotent sur les axes 19 et 20 et le point d'action 31 du bras 16 agit sur le microcontact 18 par un déplacement radial égal et de sens contraire à celui du microcontact 18.

Revendications

1° - Bielle électrodynamométrique à seuil d'effort constituant un détecteur de commande électrique de haute sécurité,
caractérisée en ce qu'elle comprend : un moyen mécanique
d'établissement d'un contact électrique au-dessus d'une
certaine force appelée "seuil dynamométrique de manoeuvre",
force applicable indifféremment en traction ou en compression, ledit moyen mécanique comprenant un détecteur dynamique à seuil actionnant un moyen de déclenchement d'un courant électrique ;

2° - Bielle électrodynamométrique selon la revendication 1
dans laquelle le moyen de déclenchement d'un courant électrique se fait à travers un dispositif mécanique intermédiaire de transformation d'un déplacement axial en un déplacement radial toujours le même, quel que soit le sens
aller ou retour du déplacement axial ; lesdites forces de
traction et/ou de compression pouvant être égales ou différentes ;

3° - Bielle électrodynamométrique selon la revendication 2
caractérisée en ce que le déplacement axial agit sur un
dispositif amplificateur ;

4° - Bielle électrodynamométrique ou détecteur-dynamométrique selon la revendication 3 comprend une partie fixe 2,
reliée dans le cas d'un avion mais pas obligatoirement par
une de ses extrêmités au tube de bielle avion, et une partie mobile 3 reliée par l'intermédiaire d'une chape ou un
embout à rotule à un élément avion par son autre extrêmité;

5° - Bielle électrodynamométrique selon la revendication 4
dans laquelle le dispositif amplificateur comprend un seul
bras de levier 16 en forme de col de cygne reposant par sa
partie fixe 2, et actionné en rotation autour de son pivot par tout déplacement de la partie mobile 3 transformant le moindre déplacement axial en déplacement radial par l'intermédiaire d'une bille 12.

6° - Bielle électrodynamométrique selon la revendication 4 dans laquelle le dispositif amplificateur comprend deux bras de levier, symétriques inversés 16 et 17, actionnés respectivement en rotation autour des pivots 19 et 20 par le déplacement radial simultané de deux billes 11 et 12 diamétralement opposées, engendré par tout mouvement axial de la partie mobile 3, ce qui a pour effet de permettre l'emploi de bras de levier nettement plus court comparé au bras de levier utilisé dans la bielle de la revendication 5 et ayant pour effet de supprimer les effets parasites provoqués par des déplacements radiaux indésirables.

7° - Bielle électrodynamométrique selon la revendication 5 dans laquelle un moyen de réglage en position relative de la tige 19 par rapport à la bille 12 est prévu, constitué par une plaquette support mobile autour d'un axe de diamètre supérieur au diamètre de la tige et d'un moyen de solidarisation par serrage avec la partie fixe 2, constitué par une vis ou un moyen analogue.

8° - Bielle électrodynamométrique selon la revendication 5 dans laquelle un double moyen de réglage en position relative de la tige 19 par rapport à la bille 12 et de la tige 20 par rapport à la bille 11 est prévu, constitué comme précédemment par une plaquette support mobile.

0006051

fig.1

3   2

31

2

3

fig.2

22   6   26   5   4 27 23   7   22 21   9

8

3   2   6   4   5   7

fig.4

12

3

14 13 15

fig.5

0

fig.3a

fig.3b

fig.3c

fig.3d

2/2

0006051

0006051

**Numéro de la demande**

**RAPPORT DE RECHERCHE EUROPEENNE**

Office européen des brevets

EP 79 40 0327

## DOCUMENTS CONSIDERES COMME PERTINENTS

| Catégorie | Citation du document avec indication, en cas de besoin, des parties pertinentes | Revendication concernée |
|---|---|---|
| | <u>US - A - 2 753 969</u> (J. CHUNG)<br><br>* Colonne 4, lignes 40-57; colonne 6, lignes 11-24; figures 5,8-14 *<br><br>-- | 1 |
| | <u>US - A - 3 848 463</u> (S. HEJZLAR et al.)<br><br>* Abrégé; figures 2,5 et 6 *<br><br>-- | 1 |
| | <u>DE - A - 2 100 583</u> (KRUEGER & CO. K.G.)<br><br>* Figure 2 *<br><br>-- | 1-3 |
| | <u>GB - A - 1 049 151</u> (THE MINISTER OF TECHNOLOGY)<br><br>* Figures 1 et 3 *<br><br>---- | 3,5,6 |

**CLASSEMENT DE LA DEMANDE (Int. Cl.³)**

G 01 L 5/00
H 01 H 3/04
G 01 D 5/04

**DOMAINES TECHNIQUES RECHERCHES (Int. Cl.³)**

G 01 L 1/00
G 01 L 1/04
G 01 L 5/00
G 01 L 5/22
G 01 L 1/26
G 01 B 7/00
G 01 D 5/04
H 01 H 3/04
B 64 C 13/00
B 64 C 13/24
B 64 C 13/28
F 16 H 35/10

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 29-08-1979 | VAN ASSCHE |

OEB Form 1503.1  06.78